(19) Europäisches Patentamt / European Patent Office / Office européen des brevets

(11) **EP 4 194 977 A2**

(12) **EUROPEAN PATENT APPLICATION**

(43) Date of publication:
14.06.2023 Bulletin 2023/24

(21) Application number: 22179584.2

(22) Date of filing: 17.06.2022

(51) International Patent Classification (IPC):
**G05B 19/418** (2006.01)     **G05B 19/19** (2006.01)
**G05B 19/416** (2006.01)     **B65G 54/02** (2006.01)

(52) Cooperative Patent Classification (CPC):
**G05B 19/19; G05B 19/416;** B65G 54/02;
G05B 19/41895; G05B 2219/41327

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 28.07.2021 JP 2021123752

(71) Applicant: Kabushiki Kaisha Yaskawa Denki
Kitakyushu-shi, Fukuoka 806-0004 (JP)

(72) Inventors:
• OKUBO, Tadashi
Kitakyushu-shi, Fukuoka, 806-0004 (JP)
• EBIHARA, Yoshiyuki
Kitakyushu-shi, Fukuoka, 806-0004 (JP)
• NAGAI, Josuke
Kitakyushu-shi, Fukuoka, 806-0004 (JP)

(74) Representative: Viering, Jentschura & Partner mbB
Patent- und Rechtsanwälte
Am Brauhaus 8
01099 Dresden (DE)

(54) **LINEAR TRANSPORT SYSTEM AND METHOD FOR CONTROLLING LINEAR TRANSPORT SYSTEM**

(57) A linear transport system includes a stator having a track and coils provided along the track, movable elements with a magnet and movable along the track, scales provided on the movable elements, sensors provided along the track at respective intervals and configured to detect the movable elements to obtain scale positions of the scales, and a parameter recording unit configured to memorize first cumulative values each corresponding to a corresponding sensor. Each of the first cumulative values is obtained by accumulating, from a reference position to the corresponding sensor, error correction values based on which errors between the respective intervals and measured values of the respective intervals are corrected. A position calculation unit is configured to calculate a position of a detected carrier based on detection data of a detecting sensor that has detected the detected carrier and based on the first cumulative value corresponding to the detecting sensor.

FIG. 2

EP 4 194 977 A2

**Description**

BACKGROUND OF THE INVENTION

FIELD OF THE INVENTION

Embodiments of the disclosure relate to a linear transport system and a method for controlling the linear transport system.

DISCUSSION OF THE BACKGROUND

International Patent Publication No. WO 2018/055772 discloses a linear conveyor device for moving a slider along a guide rail in a predetermined moving direction. In this linear conveyor device, each driver in each of the plurality of sensor structures has a data storage unit, a sensor position calculation unit, and a position specifying unit. The data storage unit stores, as first sensor interval data, the interval between the sensor of the sensor structure to which it belongs and the sensor of the sensor structure located upstream in the slider movement direction. The sensor position calculation unit calculates sensor position data of a sensor constituting a sensor structure to which it belongs based on first sensor interval data stored in a data storage unit. The position specifying unit specifies the position of the slider based on the addition data obtained by adding the sensor position data from the sensor position calculation unit and the detection data from the sensor constituting the sensor structure to which the position specifying unit belongs.

SUMMARY OF THE INVENTION

PROBLEMS TO BE SOLVED BY THE INVENTION

In the above-described linear conveyor apparatus according to the prior art, the sensor position calculation unit calculates sensor position data by cumulatively adding a plurality of first sensor interval data from a sensor constituting an origin to its own sensor. As described above, since the sensor position data cannot be calculated without using not only the first sensor interval data held by the sensor structure to which the sensor structure belongs but also the first sensor interval data held by a plurality of other sensor structures, there is a possibility that the processing speed becomes slow, the position specification of the slider is delayed, and the reliability is lowered.
It is an object of the present invention to provide a linear transport system and a control method for the linear transport system which can improve reliability.

Means to solve the problem

According to one aspect of the present invention, a linear transport system includes a stator having a track, a plurality of movable elements movable along the track, a plurality of scales provided on the plurality of movable elements, respectively, a plurality of sensors provided along the track of the stator at respective intervals, a parameter recording unit, and a position calculation unit. The stator includes a plurality of coils provided along the track. Each of the plurality of movable elements has a magnet. The plurality of sensors is configured to detect the plurality of movable elements to obtain scale positions of the plurality of scales. The parameter recording unit is configured to memorize first cumulative values each corresponding to a corresponding sensor among the plurality of sensors. Each of the first cumulative values is obtained by accumulating, from a reference position to the corresponding sensor, error correction values based on which errors between the respective intervals and measured values of the respective intervals are corrected. The position calculation unit is configured to calculate a position of a detected movable element among the plurality of movable elements based on detection data of a detecting sensor among the plurality of sensors that has detected the detected movable element and based on the first cumulative value corresponding to the detecting sensor.
According to another aspect of the present invention, a linear transport system includes a stator having a track, a plurality of movable elements movable along the track, a plurality of scales provided on the plurality of movable elements, respectively, a plurality of sensors provided along the track of the stator at respective intervals, a plurality of first controllers, and a second controller connected to the plurality of first controllers to control positions of the plurality of movable elements. The stator includes a plurality of coils provided along the track. Each of the plurality of movable elements has a magnet. The plurality of sensors is configured to detect the plurality of movable elements to obtain scale positions of the plurality of scales. Each of the plurality of first controllers is configured to control group coils among the plurality of coils which are provided in a partial region of the track of the stator. The second controller includes a collision prevention processing unit to prevent a collision by monitoring a distance between the plurality of movable elements based on detection data of the plurality of sensors. The plurality of first controllers has an emergency stop processing unit configured to determine whether two or more of the plurality of movable elements exist within the respective intervals based on the detection data of the plurality of sensors, and configured to stop the plurality of movable elements when the plurality of first controllers determines that the two or more movable elements exist within the respective intervals.

According to the other aspect of the present invention, a method for controlling a linear transport system includes providing a stator which includes a track and a plurality of coils provided along the track; providing a plurality of movable elements movable along the track, each of the plurality of movable elements having a magnet; providing a plurality of scales on the plurality of movable elements, respectively; providing a plurality of sensors along the track of the stator at respective intervals, the plurality of sensors detecting the plurality of movable elements to obtain scale positions of the plurality of scales; accumulating, from a reference position to a corresponding sensor among the plurality of sensors, to obtain first cumulative values, error correction values based on which errors between the respective intervals and measured values of the respective intervals are corrected; memorizing the first cumulative values each corresponding to the corresponding sensor; and calculating a position of a detected movable element among the plurality of movable elements based on detection data of a detecting sensor among the plurality of sensors that has detected the detected movable element and based on the first cumulative value corresponding to the detecting sensor.

According to further aspect of the present invention, a method for controlling a linear transport system includes providing a stator which includes a track and a plurality of coils provided along the track; providing a plurality of movable elements movable along the track, each of the plurality of movable elements having a magnet; providing a plurality of scales on the plurality of movable elements, respectively; providing a plurality of sensors along the track of the stator at respective intervals, the plurality of sensors detecting the plurality of movable elements to obtain scale positions of the plurality of scales; providing a plurality of first controllers each of which is configured to control group coils among the plurality of coils which are provided in a partial region of the track of the stator; determining, by the plurality of first controllers, whether two or more of the plurality of movable elements exist within the respective intervals based on the detection data of the plurality of sensors; stopping the plurality of movable elements when the plurality of first controllers determine that the two or more movable elements exist within the respective intervals; providing a second controller connected to the plurality of first controllers to control positions of the plurality of movable elements; and preventing a collision, by the second controller, by monitoring a distance between the plurality of movable elements based on detection data of the plurality of sensors.

EFFECT OF THE INVENTION

According to the linear transport system and the like of the present invention, reliability can be improved.

BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings.

FIG. 1 is a diagram conceptually showing an example of the overall configuration of a linear transport system according to an embodiment.
FIG. 2 is a diagram conceptually showing a part of a configuration example of a control system of the linear transport system according to the embodiment.
FIG. 3 is a block diagram showing an example of a functional configuration of a control unit of the multi-axis amplifier.
FIG. 4 is an explanatory diagram showing a specific example of a calculation method of each parameter set in the sensor head and the machine coordinate position of the movable element when the movable element is located at the origin.
FIG. 5 is an explanatory diagram showing a specific example of a calculation method of each parameter set in the sensor head and the machine coordinate position of the movable element when the movable element is moved in the moving direction from the origin.
FIG. 6 is an explanatory diagram showing an example of a calculation method of each parameter set in the sensor head and the machine coordinate position of the movable element when there is an error in the interval between the sensor heads.
FIG. 7 is an explanatory diagram showing another example of a calculation method of each parameter set in the sensor head and the machine coordinate position of the movable element when there is an error in the interval between the sensor heads.
FIG. 8 is a flowchart showing an example of a processing procedure executed by the multi-axis amplifier.
FIG. 9 is a block diagram showing an example of a functional configuration of a linear controller.
FIG. 10 is a flowchart showing an example of a processing procedure executed by a linear controller.

FIGS. 11A-11F are explanatory diagram showing examples of the operation of the movable element by the collision prevention processing unit of the linear controller.

FIGS. 12A-12D are explanatory view showing another examples of the operation of the movable element by the collision prevention processing unit of the linear controller.

FIG. 13 is a block diagram showing a hardware configuration example of the multi-axis amplifier or the linear controller.

DESCRIPTION OF THE EMBODIMENTS

Hereinafter, embodiments will be described with reference to the drawings.

<1. Overall Configuration of Linear Transport System>

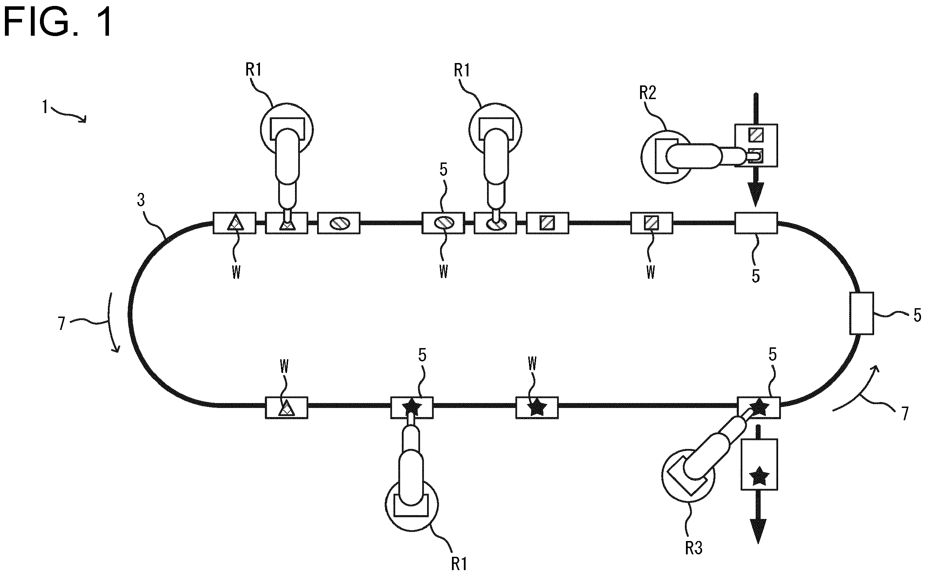

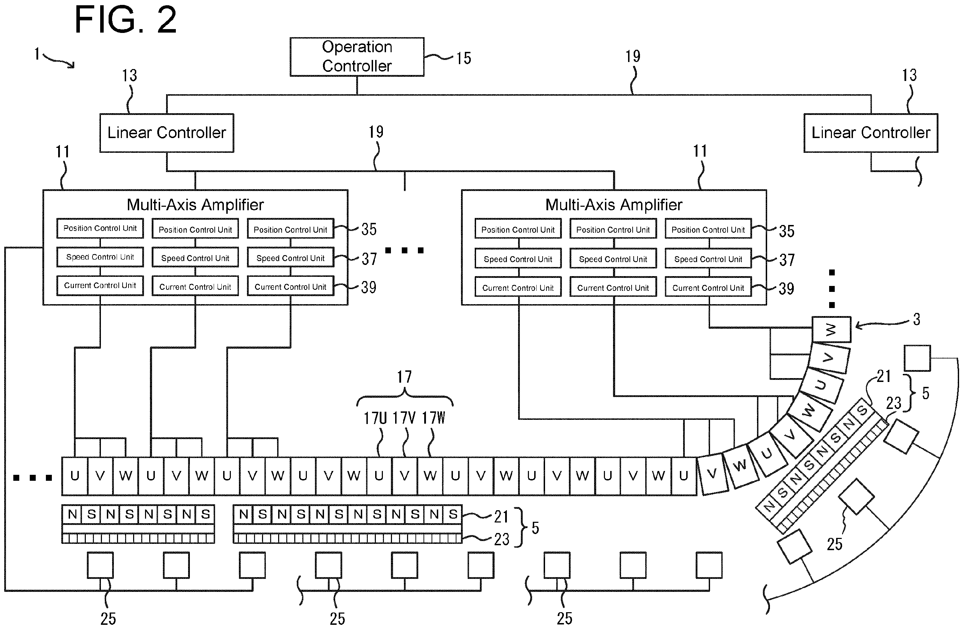

Referring to FIGS. 1 and 2, an example of the overall configuration of the linear transport system according to the embodiment will be described. FIG. 1 is a diagram conceptually showing an example of the overall configuration of the linear transport system according to the embodiment, and FIG. 2 is a diagram conceptually showing a part of the configuration of the control system of the linear transport system according to the embodiment by extracting the part.

As shown in FIG. 1, the linear transport system 1 has a stator 3 and a plurality of movable elements (an example of "a plurality of carriers") 5. The stator 3 has a track. The track has, for example, a loop shape. Each of the movable elements 5 moves along the track of the stator 3 to convey the workpiece W. The stator 3 is provided with a plurality of coils, and each of the movable elements 5 is provided with a magnet. The linear transport system 1 is a so-called moving magnet type. Each movable element 5 may have a uniform length in the moving direction, or may include a plurality of movable elements 5 having different lengths in the moving direction. Around the stator 3, for example, a processing device R1 for processing or assembling the workpiece W, a carry-in device R2 for carrying in the workpiece W, and a carry-out device R3 for carrying out the workpiece W are disposed. The linear transport system 1 conveys the workpiece W by moving the movable element 5 in the direction of the arrow 7 in FIG. 1, and performs processing, assembly, and the like.

As shown in FIG. 2, the linear transport system 1 includes a multi-axis amplifier 11, a linear controller 13, and an operation controller 15. In FIG. 2, some sections of the stator 3 are illustrated, but other sections of the stator 3 have the same configuration.

The multi-axis amplifier 11 (an example of "first control circuitry" or "first controller") controls the energization of the coils in a part of the section of the stator 3. In the example shown in FIG. 2, the multi-axis amplifier 11 supplies electric power to, for example, three sets of coils 17 when one set of coils 17 is composed of, for example, a U-phase coil 17U, a V-phase coil 17 v and a W-phase coil 17W provided in the stator 3. The multi-axis amplifier 11 controls the energization of each of the three sets of coils 17 independently, and controls the position or speed of the movable element 5. A plurality of multi-axis amplifiers 11 (for example, one for each of three sets of coils 17) are provided. A plurality of multi-axis amplifiers 11 for energizing coils 17 belonging to a common stator 3 are connected to each other via a communication cable 19, and can transmit and receive data by, for example, SPI (Serial Peripheral Interface) communication.

As shown in FIG. 2, each movable element 5 has a magnet 21 which is a permanent magnet and a scale 23. The scale 23 is provided with a movable element ID for identifying each movable element 5 and a scale for detecting the machine coordinate position of each movable element 5. As shown in FIG. 2, a plurality of sensor heads 25 (an example of sensors) are arranged along the stator 3 at predetermined intervals. The predetermined interval is set to be shorter than the length of the scale 23 so that the movable element 5 can be detected at any position, for example. Each sensor head 25 detects the movable element ID and scale of the scale 23 of the movable element 5 facing each other. Three sensor heads 25 corresponding to three sets of coils 17 to be controlled are connected to each multi-axis amplifier 11. Each multi-axis amplifier 11 receives detection data of the three sensor heads 25. Each multi-axis amplifier 11 shares the detection data of the sensor head 25 with an adjacent multi-axis amplifier 11 (multi-axis amplifier 11 corresponding to front and rear in the moving direction) via the communication cable 19. This makes it possible to smoothly switch the control of the multi-axis amplifier 11 in accordance with the movement of the movable element 5.

The linear controller 13 (an example of "second control circuitry" or "second controller") is connected to a plurality of multi-axis amplifiers 11 corresponding to the common stator 3 via a communication cable 19. The linear controller 13 controls the positions of a plurality of movable elements 5 located on the loop of the stator 3. The linear transport system 1 has a plurality of linear controllers 13. The linear controller 13 converts the position command for designating the position of each movable element 5 on the loop in the stator 3 received from the operation controller 15 into a position command for each section of the stator 3 corresponding to each multi-axis amplifier 11, and transmits the position command to each multi-axis amplifier 11. The linear controller 13 generates a speed command for preventing a collision between the movable elements 5 on the loop of the stator 3, and transmits it to each multi-axis amplifier 11.

The operation controller 15 is connected to a plurality of linear controllers 13 via a communication cable 19.

The operation controller 15 controls the positions of the plurality of movable elements 5 located on the loop of the stator 3, that is, the positions of all the movable elements 5 provided in the linear transport system 1. The operation controller 15 transmits a position command for designating the position of each movable element 5 on the loop in the stator 3 to each linear controller 13.

The linear controller 13 and the operation controller 15 are a control apparatus having, for example, a calculation device (CPU), a recording device, an input device and the like. As the linear controller 13 and the operation controller 15, for example, a general-purpose computer (PC), a motion controller, a programmable logic controller (PLC) or the like may be used.

The configuration of the linear transport system 1 described above is an example, and is not limited to the contents described above. For example, the stator 3 may be disposed horizontally or inclined at a predetermined angle with respect to the vertical or horizontal direction. The number of the stators 3 is not limited to a single one, but may be a plurality. The object to which power is supplied by the multi-axis amplifier 11 is not limited to three sets of coils 17, and power may be supplied to two sets or four or more sets of coils 17. It may be a single axis amplifier that supplies power to a set of coils 17.

<2. Functional Configuration of Control Unit of Multi-Axis Amplifier>

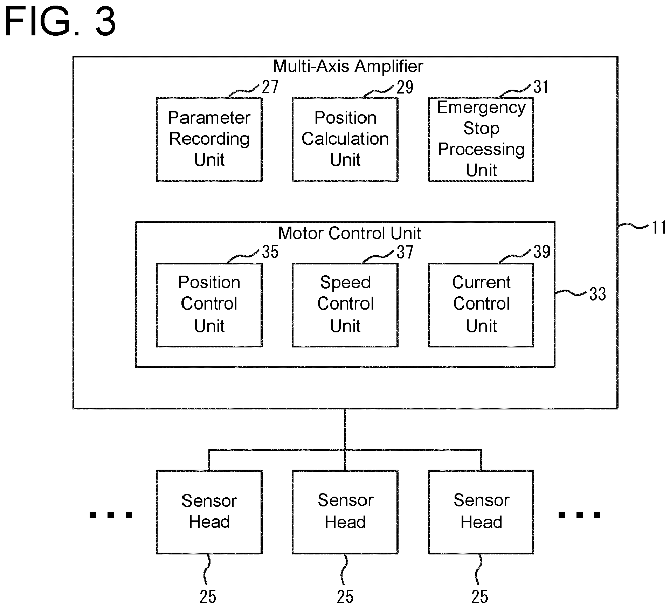

An example of the functional configuration of the control unit of the multi-axis amplifier 11 will be described with reference to FIG. 3. The multi-axis amplifier 11 has, for example, a control unit having a computing device (CPU), a recording device and the like, and a power supply unit (for example, an inverter unit, a PWM control circuit and the like) for supplying power to the coil 17 of the stator 3. FIG. 3 is a block diagram showing an example of the functional configuration of the control unit of the multi-axis amplifier 11, and the power supply unit is not shown.

As shown in FIG. 3, the multi-axis amplifier 11 has a parameter recording unit (an example of "a parameter memory") 27, a position calculation unit (an example of "position calculation circuitry") 29, an emergency stop processing unit (an example of "emergency stop processing circuitry") 31, and a motor control unit 33. The motor control unit 33 controls the energization of each of the three sets of coils 17 to control a linear motor constituted by the three sets of coils 17 and the movable element 5. The motor control unit 33 has a position control unit 35, a speed control unit 37, and a current control unit 39. The position control unit 35 generates a speed command based on a position deviation between a position command from the linear controller 13 and a machine coordinate position (calculated by the position calculation unit 29) of the movable element 5 based on the detection data of the sensor head. The speed control unit 37 generates a torque command based on the speed deviation between the speed command generated by the position control unit 35 or the speed command from the linear controller 13 and the speed of the movable element 5 based on the detection data of the sensor head 25. The current control unit 39 converts the torque command generated by the speed control unit 37 into a current command, generates a voltage command based on the current command and the detection data of the current sensor that detects the current supplied to the coil 17, and generates a control signal (for example, a PWM signal or the like) based on the voltage command. The control signal is output to an inverter unit (not illustrated). The inverter unit converts DC power into AC power based on the control signal and supplies the AC power to the coil 17.

The parameter recording unit 27 records an error correction value for correcting an error between a set value of an installation interval (an example of "respective intervals") of the sensor head 25 and a measured value obtained by measuring the installation interval in advance, and a first cumulative value accumulated from the sensor head 25 set at the origin (an example of "a reference position") as a parameter for each sensor head 25. The error correction value may be an error value obtained by subtracting the set value from the measured value, or may be a measured value itself in which the error value is incorporated. The first cumulative value may be a cumulative error value obtained by accumulating error values or a cumulative measurement value obtained by accumulating measurement values.

The installation interval of the sensor head 25 may be measured, for example, by moving the measuring movable element 5 having a scale 23 longer than the installation interval along the stator 3. In this case, the difference between the detection data of the adjacent sensor heads becomes a measurement value of the installation interval.

The parameter recording unit 27 records the second cumulative value accumulated from the sensor head 25 whose origin is set to the set value of the installation interval of the sensor head 25 as a separate parameter for each sensor head 25.

The parameter recording unit 27 records the origin correction value, which is the detection data of the sensor head 25 that has detected the scale 23 of the movable element 5, as a parameter common to a plurality of sensor heads 25 disposed on the same stator 3, when the movable element 5 is located at a desired position as the origin.

The parameter recording unit 27 may record the parameters (first cumulative value, second cumulative value, origin correction value) for the three sensor heads 25 connected to the multi-axis amplifier 11 to which the parameter recording unit 27 belongs, or may record the parameters for all the sensor heads 25 arranged in the common stator 3. As the parameter recording unit 27, a nonvolatile memory such as an EEPROM or a recording device such as a hard disk may be used. The parameter recording unit 27 may be provided outside the multi-axis amplifier 11, for example, in a linear controller 13, an operation controller 15, a sensor head 25, or other external recording devices and the like . In this case, the multi-axis amplifier 11 may obtain necessary information from a parameter recording unit 27 provided outside.

A position calculation unit 29 calculates the machine coordinate position of a movable element 5 on the basis of detection data of a sensor head 25 which has detected a scale 23, a first cumulative value and a second cumulative value which are parameters set for the sensor head 25 which has detected the scale 23, and an origin correction value which is a parameter common to a plurality of sensor heads 25. Details of the calculation method will be described later.

An emergency stop processing unit 31 determines whether or not two or more movable elements 5 exist within a predetermined interval of a stator 3 on the basis of the machine coordinate position of the movable element 5 calculated by a position calculation unit 29, and stop emergently all or a part of the two or more movable elements 5 (for example, the rear movable element 5) when it is determined that two or more movable elements 5 exist. The predetermined interval is a coil pitch of a pair of coils 17 including, for example, a U-phase coil 17U, a V-phase coil 17V, and a W-phase coil 17W. As described above, the multi-axis amplifier 11 performs energization control for each pair of coils 17 to control the position of the movable element 5. Therefore, when two or more movable elements 5 are present in the coil pitch of one set of coils 17, each of them cannot be controlled independently, and there is a possibility that the movable element 5 becomes uncontrollable and a collision or the like is caused. In order to control each movable element 5 independently, it is necessary to make the interval between each movable element 5 larger than the coil pitch of one set of coils 17. When two or more movable elements 5 are present in the coil pitch of one set of coils 17, collision can be avoided by making an emergency stop, and reliability can be ensured.

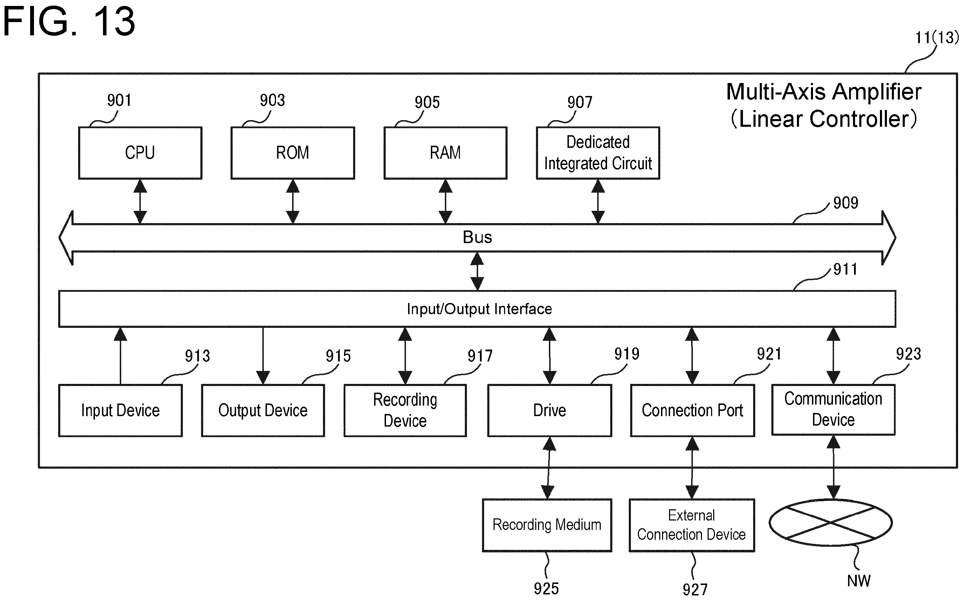

The processes in the parameter recording unit 27, the position calculation unit 29, the emergency stop processing unit 31, the motor control unit 33 and the like described above are not limited to examples of sharing of these processes. For example, the processing may be performed by a smaller number of processing units (for example, one processing unit), or may be performed by further subdivided processing units. In the multi-axis amplifier 11, only a portion for supplying electric power to the coil 17 (for example, an inverter portion, a PWM control circuit or the like) may be mounted by an actual device, and other functions of each of the above-mentioned processing portions may be mounted by a program executed by the CPU901 (see FIG. 13) described later. Some or all of the functions of each processing unit may be implemented by an actual device such as an ASIC, an FPGA, or other electric circuit. The functions of each processing section are not necessarily executed only by the multi-axis amplifier 11, and some or all of them may be executed by the linear controller 13 or the operation controller 15.

<3. Specific Example of Calculation Method for Each Parameter of Sensor Head and Machine Coordinate Position of Movable element>

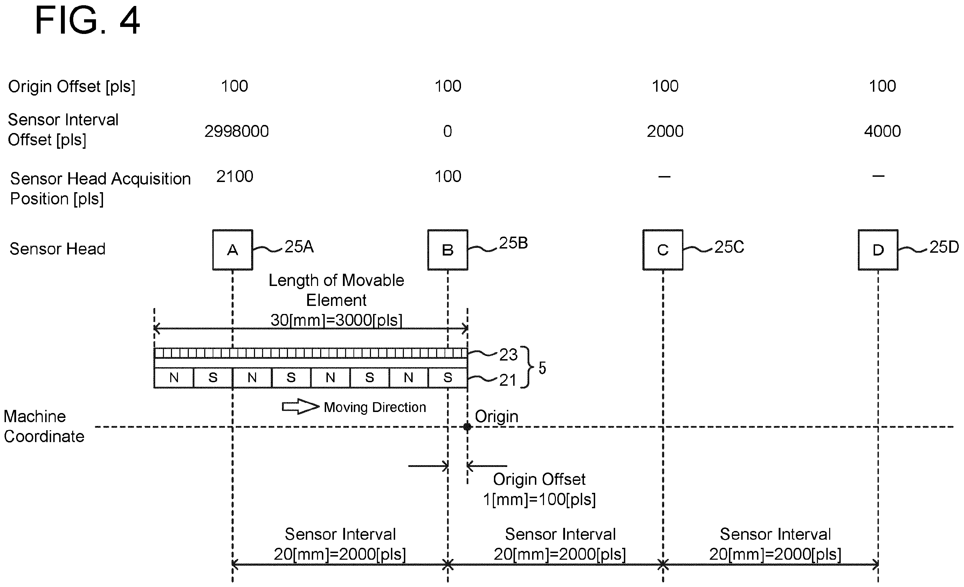

With reference to FIGS. 4 to 7, a specific example of a calculation method of each parameter set in the sensor head 25 and the machine coordinate position of the movable element 5 will be described.

In the example shown in FIGS. 4 to 7, for example, the total length of the movable element 5 in the moving direction (the total length of the scale 23) is 30 mm, the number of pulses generated when each of the sensor heads 25A to 25D detects the total length of the scale 23 is 3000 pulses (pls), the set value of the installation interval of each sensor head 25 is 20 mm (= 2000 pulses), and the total length of the loop of the stator 3 is 30m (= 3000000 pulses). The origin of the movable element 5 in the machine coordinate is set to a position where the tip of the movable element 5 passes through the sensor head 25B by 1 mm (= 100 pulses) in the moving direction, and the sensor head 25B is set to the origin. When the movable element 5 is located at the origin, the machine coordinate position is 0 pulses (= 3000000 pulses).

In this case, the sensor head acquisition position (an example of detection data) by the sensor head 25B with respect to the scale 23 of the movable element 5 located at the origin becomes 100 pulses, and the origin offset (an example of origin correction value ) becomes 100 pulses. The origin offset is recorded as a parameter common to all the sensor heads 25 arranged in the common stator 3.

The sensor interval offset (an example of the second cumulative value) obtained by accumulating the set value of the installation interval of each sensor head 25 from the sensor head 25B set at the origin is recorded as a separate parameter for each sensor head 25. The sensor interval offset is, for example, 0 pulses in the sensor head 25B, 2000 pulses in the sensor head 25C, 4000 pulses in the sensor head 25D, and 2998000 pulses in the sensor head 25A.

FIG. 4 shows a case where the movable element 5 is located at the origin. In this case, as described above, the sensor head acquisition position by the sensor head 25B becomes 100 pulses, and the sensor head acquisition position by the sensor head 25A becomes 2100 pulses. The position calculation unit 29 calculates the machine coordinate position of the movable element 5 based on the following equation (1).

(Equation 1)

Mechanical coordinate position [pls] of movable element = sensor head acquisition position

[pls] + sensor interval offset [pls] − origin offset [pls]   (1)

According to the above equation (1), the machine coordinate position of the movable element 5 becomes 0 pulses when calculated using the sensor head acquisition position by the sensor head 25B, and becomes 3000000 pulses (= 0 pulses) when calculated using the sensor head acquisition position by the sensor head 25A. The mechanical coordinate position of the movable element 5 is the origin position regardless of which detection data of the sensor heads 25A and 25B is used.

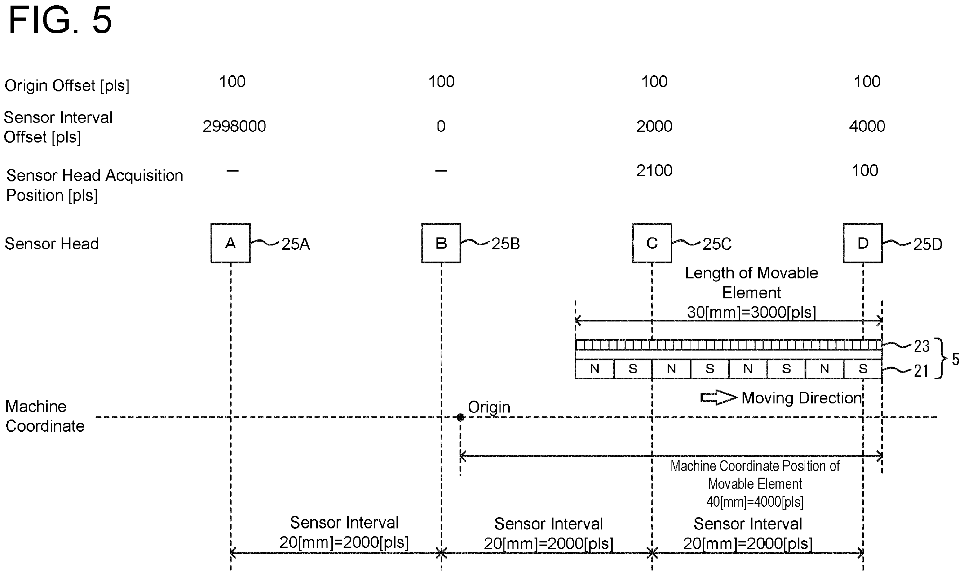

FIG. 5 shows a case where the movable element 5 has moved in the moving direction from the origin by, for example, 40 mm (= 4000 pulses). In this case, the scale 23 is not detected by the sensor heads 25A and 25B. The sensor head acquisition position by the sensor head 25D becomes 100 pulses, and the sensor head acquisition position by the sensor head 25C becomes 2100 pulses. According to the above equation (1), the machine coordinate position of the movable element 5 becomes 4000 pulses even when calculated using the sensor head acquisition position by the sensor head 25D, and becomes 4000 pulses even when calculated using the sensor head acquisition position by the sensor head 25C.

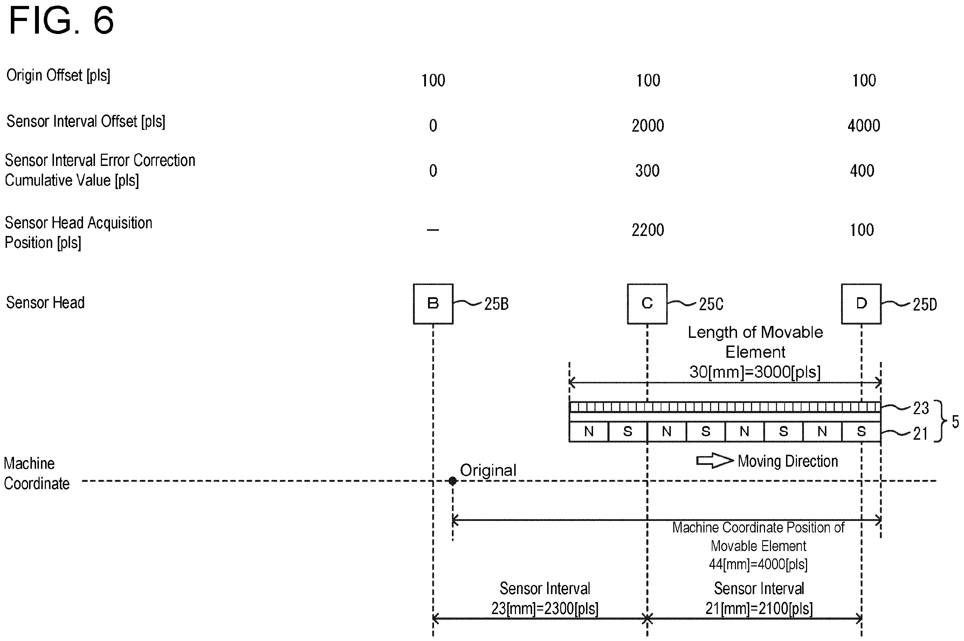

FIG. 6 shows an example of a calculation method of the machine coordinate position of the movable element in the case where there is an error in the installation interval of each sensor head 25. In the example shown in FIG. 6, the set value of the installation interval of each sensor head 25 is 20 mm (= 2000 pulses), whereas, for example, the measured value of the installation interval between the sensor heads 25B and 25C is 23 mm (= 2300 pulses) and the measured value of the installation interval between the sensor heads 25C and 25D is 21 mm (= 2100 pulses).

In this case, an error value (an example of the error correction value ) obtained by subtracting the set value from the measured value obtained by measuring the installation interval between the sensor heads 25 in advance, and a sensor interval error correction cumulative value (an example of the first cumulative value) accumulated from the sensor head 25B set at the origin are recorded as separate parameters for each sensor head 25. The sensor interval error correction cumulative value is, for example, 0 pulses for the sensor head 25B, 300 pulses for the sensor head 25C, and 400 pulses for the sensor head 25D. The origin offset and sensor interval offset are the same as those shown in FIGS. 4 and 5.

In the example shown in FIG. 6, the movable element 5 is moved in the moving direction from the origin by, for example, 44 mm (= 4400 pulses). In this case, the sensor head acquisition position by the sensor head 25D becomes 100 pulses, and the sensor head acquisition position by the sensor head 25C becomes 2200 pulses. The position calculation unit 29 calculates the machine coordinate position of the movable element 5 based on the following equation (2).

(Equation 2)

Machine coordinate position [pls] of movable element = sensor head acquisition position

[pls] + sensor interval error correction cumulative value [pls] + sensor interval offset [pls] −

origin offset [pls]   (2)

According to the above equation (2), the machine coordinate position of the movable element 5 becomes 4400 pulses even when calculated using the sensor head acquisition position by the sensor head 25D, and becomes 4400 pulses even when calculated using the sensor head acquisition position by the sensor head 25C.

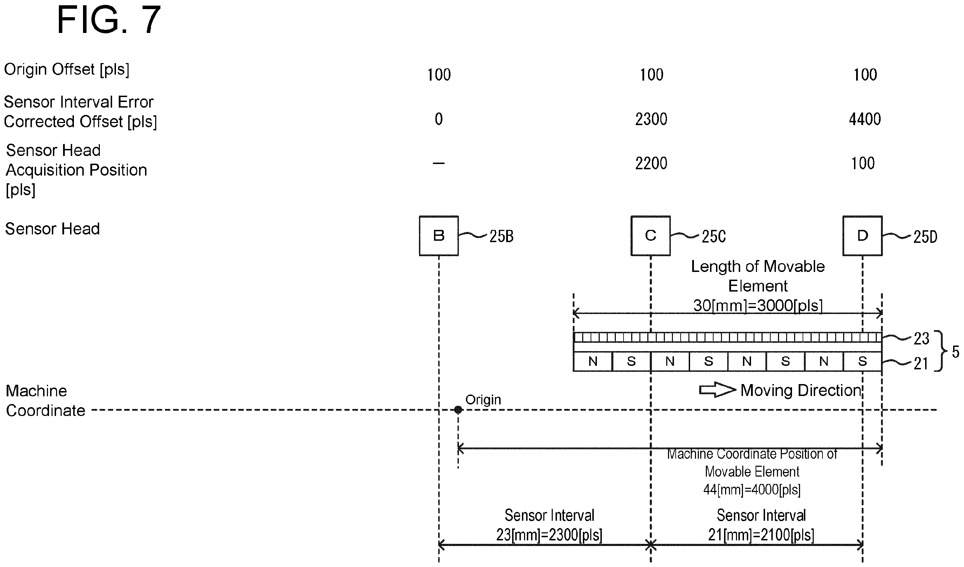

FIG. 7 shows another example of a calculation method of the machine coordinate position of the movable element in the case where there is an error in the installation interval of each sensor head 25. The measurement value of the installation interval of each sensor head 25 is similar to that shown in FIG. 6. In the example shown in FIG. 7, the sensor interval error correction offset (an example of the first cumulative value), which is obtained by accumulating the measurement value of the installation interval of each sensor head 25 from the sensor head 25B set at the origin, is recorded as a separate parameter for each sensor head 25. The sensor interval error corrected offset is, for example, 0 pulses in the sensor head 25B, 2300 pulses in the sensor head 25C, and 4400 pulses in the sensor head 25D.

In the example shown in FIG. 7, the movable element 5 moves in the moving direction from the origin by, for example, 44 mm (= 4400 pulses). In this case, the sensor head acquisition position by the sensor head 25D becomes 100 pulses, and the sensor head acquisition position by the sensor head 25C becomes 2200 pulses. The position calculation unit 29 calculates the machine coordinate position of the movable element 5 based on the following equation (3).

(Equation 3)

$$\text{Mechanical coordinate position [pls] of movable element} = \text{sensor head acquisition position}$$

$$\text{[pls]} + \text{sensor interval error corrected offset [pls]} - \text{origin offset [pls]} \quad (3)$$

According to the above equation (3), the machine coordinate position of the movable element 5 becomes 4400 pulses even when calculated using the sensor head acquisition position by the sensor head 25D, and becomes 4400 pulses even when calculated using the sensor head acquisition position by the sensor head 25C.

In the above description, the machine coordinate position of the movable element is calculated by the number of pulses generated by the sensor head 25, but other units may be used. For example, it may be calculated using a predetermined command unit (for example, 1 command unit = 1 mm).

As described above, each cumulative value is accumulated from the sensor head 25B set to the origin, but may be a value accumulated from the origin in the machine coordinates. In this case, for example, the sensor interval offset (an example of the second cumulative value) may be 2999900 pulses for the sensor head 25B, 1900 pulses for the sensor head 25C, 3900 pulses for the sensor head 25D, or 2997900 pulses for the sensor head 25A. For example, the sensor interval error correction cumulative value (an example of the first cumulative value ) shown in FIG. 6 may be -100 pulses in the sensor head 25B, 200 pulses in the sensor head 25C, and 300 pulses in the sensor head 25D. For example, the sensor interval error corrected offset (an example of the first cumulative value ) shown in FIG. 7 may be -100 pulses in the sensor head 25B, 2200 pulses in the sensor head 25C, and 4300 pulses in the sensor head 25D. In these cases, the origin offset is not necessary.

<4. Processing Procedure of Multi-Axis Amplifier>

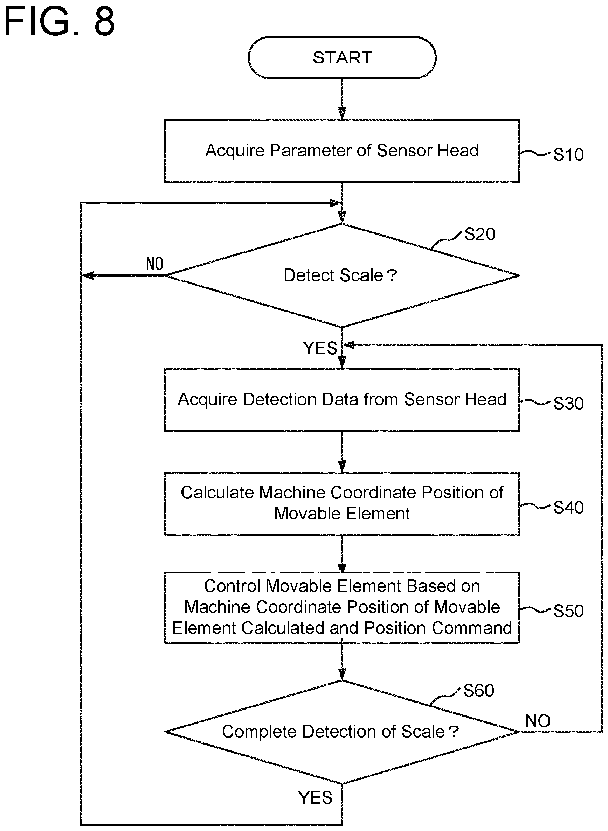

An example of a processing procedure executed by the multi-axis amplifier 11 will be described with reference to FIG. 8. FIG. 8 is a flowchart showing an example of a processing procedure executed by the multi-axis amplifier 11.

In step S10, the multi-axis amplifier 11 acquires parameters of each sensor head 25 from the parameter recording unit 27. The parameters of the sensor head 25 include a sensor interval offset, an origin offset, and a sensor interval error correction cumulative value .

In step S20, the multi-axis amplifier 11 determines whether or not the connected sensor head 25 has detected the scale 23. If the scale 23 is not detected (step S20 : NO), this step S20 is repeated until the scale 23 is detected. When the scale 23 is detected (step S20 : YES), the process proceeds to step S30.

In step S30, the multi-axis amplifier 11 acquires the detection data from the sensor head 25 that has detected the scale 23. The detection data includes the movable element ID and the sensor head acquisition position.

In step S40, the multi-axis amplifier 11 calculates the machine coordinate position of the movable element 5 by the position calculation unit 29 based on the sensor head acquisition position acquired in step S30 and the parameter acquired in step S10. In steps S10 to S40, parameters such as cumulative data are acquired before the scale 23 is detected, and only sensor head acquisition position data is acquired when the scale 23 is detected, so that the machine coordinate position can be calculated quickly.

In step S50, the multi-axis amplifier 11 performs position control or speed control of the movable element 5 by energizing the coil 17 based on the position command received from the linear controller 13 and the machine coordinate position of the movable element 5 calculated in step S40 by the motor control unit 33.

In step S60, the multi-axis amplifier 11 determines whether or not the detection of the scale 23 by the sensor head 25 has been completed. When the scale 23 is being detected (step S60 : NO), the process returns to step S30. The procedure of steps S30 to S50 is repeated until the detection of the scale 23 is completed. When the detection of the scale 23 is completed (step S60 : YES), the process returns to step S20.

Note that the above-described processing procedure is an example, and at least a part of the above-described procedure may be deleted or changed, or a procedure other than the above-described procedure may be added. Further, the order of at least a part of the procedure may be changed, or a plurality of procedures may be combined into a single procedure.

<5. Functional Configuration of Linear Controller>

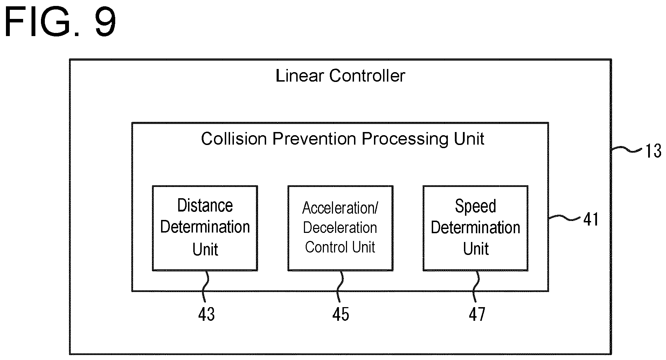

An example of a functional configuration of the linear controller 13 will be described with reference to FIG. 9. FIG. 9 is a block diagram showing an example of the functional configuration of the linear controller 13.

As shown in FIG. 9, the linear controller 13 has a collision prevention processing unit (an example of "collision prevention processing circuitry") 41. The collision prevention processing unit 41 acquires the machine coordinate position of a movable element 5 calculated by a position calculation unit 29 of a multi-axis amplifier 11, and monitors the distance between a plurality of movable elements 5 based on the machine coordinate position of the movable element 5 to prevent a collision. The collision prevention processing unit 41 includes a distance determination unit (an example of "distance determination circuitry") 43, an acceleration/deceleration control unit (an example of "acceleration/deceleration control circuitry") 45, and a speed determination unit (an example of "speed determination circuitry") 47.

A distance determination unit 43 determines whether or not an actual distance between movable elements (an example of the distance between movable elements), which is the actual movable distance between a rear movable element 5R (an example of "a first movable element") located at the rear and a front movable element (5F) (an example of a second movable element) located at the front in the moving direction of a plurality of movable elements 5, is equal to or less than a predetermined traveling distance of the movable element (an example of a threshold value). The traveling distance between the movable elements is, for example, a sum of the set value of the distance between the movable elements, which is a value set in advance as the distance between the movable elements, and the deceleration distance of the rear movable element 5R, which is a braking distance required until the rear movable element 5R stops. The set value of the distance between movable elements varies according to the interval. For example, in front of the curve section, the set value of the distance between the movable elements may be increased more than in the straight section.

It should be noted that the travel distance between the movable elements is not limited to the sum of the set value of the distance between the movable elements and the deceleration distance of the rear movable element 5R. For example, the travel distance between the movable elements may be the sum of the set value of the distance between the movable elements and the relative distance required until the rear movable element 5R decelerates to the speed of the front movable element 5F. The travel distance between the movable elements may be the sum of the set value of the distance between the movable elements, the deceleration distance of the rear movable element, and the relative distance required for the rear movable element 5R to decelerate to the speed of the front movable element 5F.

The acceleration/deceleration control unit 45 decelerates the speed of the rear movable element 5R so as to be substantially equal to the speed of the front movable element 5F when it is determined by the distance determination unit 43 that the actual distance between the movable elements is equal to or less than the distance between the movable elements during travel. When the speed of the rear movable element 5R is decelerated so as to be substantially equal to the speed of the front movable element 5F, the acceleration/deceleration control unit 45 executes additional deceleration on the basis of a difference value obtained by subtracting the actual distance between the movable elements from the distance between the movable elements during travel. The additional deceleration makes it possible to increase the actual distance between the movable elements, and an appropriate distance between the movable elements can be maintained by performing the additional deceleration until the actual distance between the movable elements is greater than the distance between the movable elements during travel. The difference value is an amount of representing how closely approached the distance between the rear movable element 5R and the front movable element 5F is and become shorter than the distance between the movable elements during travel. The additional deceleration is executed so that the smaller the actual distance between the movable elements after the approach (the larger the approach amount), the larger the deceleration amount. For example, when the distance between the movable elements during travel is 100 mm, additional deceleration may be executed in proportion to the approaching distance, such as + 1% deceleration of the rear movable element 5R when the distance between the actual movable elements is 99 mm (when the approaching distance is 1 mm), + 10% deceleration of the rear movable element 5R when the distance between the actual movable elements is 90 mm (when the approaching distance is 10 mm), and + 90% deceleration of the rear movable element 5R when the distance between the actual movable elements is 10 mm (when the approaching distance is 90 mm).

When the speed of the rear movable element 5R is decelerated so as to be substantially equal to the speed of the front movable element 5F, a speed determination unit 47 determines whether or not the speed of the front movable element 5F is greater than the command speed of the rear movable element 5R. The command speed of the rear movable element 5R is a command speed based on a speed profile based on a position command for the rear movable element 5R. The acceleration/deceleration control unit 45 controls the speed of the rear movable element 5R so as to follow the command speed when the speed determination unit 47 determines that the speed of the front movable element 5F is greater than the command speed of the rear movable element 5R.

The processes in the collision prevention processing unit 41, the distance determination unit 43, the acceleration/deceleration control unit 45, the speed determination unit 47 and the like described above are not limited to examples of the sharing of these processes. For example, the processing may be performed by a smaller number of processing units (for example, one processing unit), or may be performed by further subdivided processing units. The functions of each processing unit may be implemented by a program executed by the CPU901 (see FIG. 13) described later, or part or all of the functions may be implemented by an actual device such as an ASIC, an FPGA, or other electric circuits. The functions of each processing unit are not necessarily executed only by the linear controller 13, and some or all of them may be executed by the operation controller 15 or the multi-axis amplifier 11.

<6. Processing Procedure of Linear Controller 13>

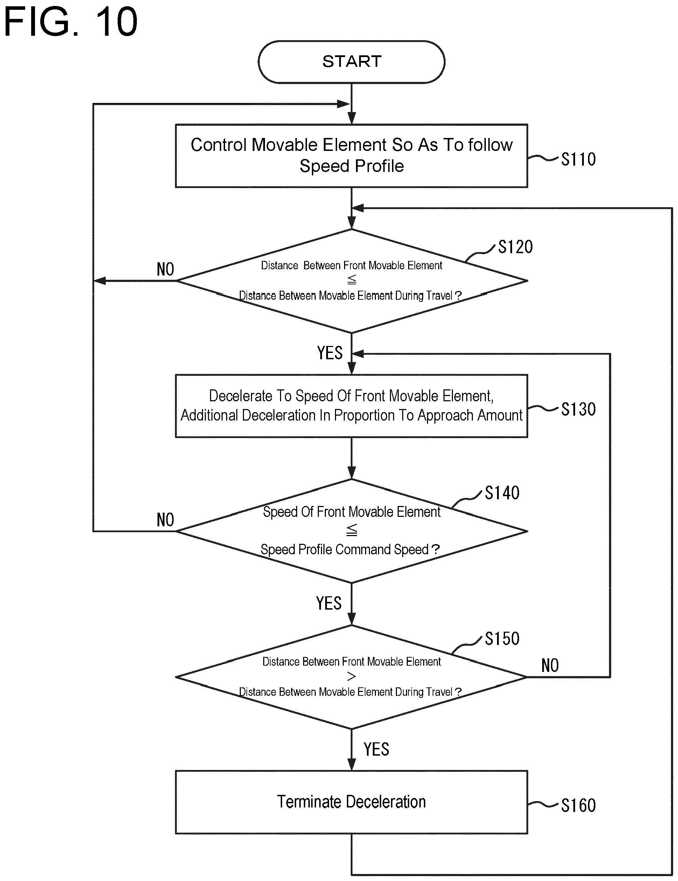

An example of a processing procedure executed by the linear controller 13 will be described with reference to FIG. 10. FIG. 10 is a flowchart showing an example of a processing procedure executed by the linear controller 13.

In step 110, the linear controller 13 controls the position or speed of the movable element 5 so as to follow the speed profile based on the position command received from the operation controller 15.

In step 120, the linear controller 13 determines whether or not the actual distance between the movable element 5 (hereinafter referred to as "rear movable element 5R") to be processed and the front movable element 5F located in front of the movable element 5F is equal to or less than the distance between the movable elements during travel by the distance determination unit 43. If the actual distance between the movable elements is greater than the distance between the movable elements during travel (step S120 : NO), the process returns to step S110. When the actual distance between the movable elements is equal to or less than the distance between the movable elements during travel (step S120 : YES), the process proceeds to step S130.

In step S130, the linear controller 13 reduces the speed of the rear movable element 5R by the acceleration/deceleration control unit 45 so as to be substantially equal to the speed of the front movable element 5F. Further, when the speed of the rear movable element 5R is substantially equal to the speed of the front movable element 5F, the linear controller 13 executes an additional deceleration by the acceleration/deceleration control unit 45 in proportion to a difference value (approach amount) obtained by subtracting the actual distance between the movable elements from the distance between the movable elements during travel.

In step 140, the linear controller 13 determines whether or not the speed of the front movable element 5F is equal to or less than the command speed based on the speed profile of the rear movable element 5R by the speed determination unit 47. When the speed of the front movable element 5F is higher than the command speed of the rear movable element 5R (step S140 : NO), the process returns to the previous step S110 to control the position or speed of the rear movable element 5R so as to follow the speed profile. When the speed of the front movable element 5F is equal to or lower than the command speed of the rear movable element 5R (step S140 : YES), the process proceeds to step S150.

In step S150, the linear controller 13 determines whether or not the distance between the rear movable element 5R and the front movable element 5F between the actual movable elements 5 is greater than the distance between the traveling movable elements 5 by the distance 43. When the actual distance between the movable elements is equal to or less than the distance between the movable elements during travel (step S150 : NO), the process returns to step S130 to continue the deceleration. If the actual distance between the movable elements is greater than the distance between the movable elements during travel (step S150 : YES), the process proceeds to step S160.

In step 160, the linear controller 13 terminates the deceleration with respect to the rear movable element 5R by the acceleration/deceleration control unit 45. Thereafter, the process returns to step 120.

Note that the above-described processing procedure is an example, and at least a part of the above-described procedure may be deleted or changed, or a procedure other than the above-described procedure may be added. Further, the order of at least a part of the procedure may be changed, or a plurality of procedures may be combined into a single procedure.

<7. Specific Example of Operation of Movable Element by Collision Prevention Processing Unit of Linear Controller>

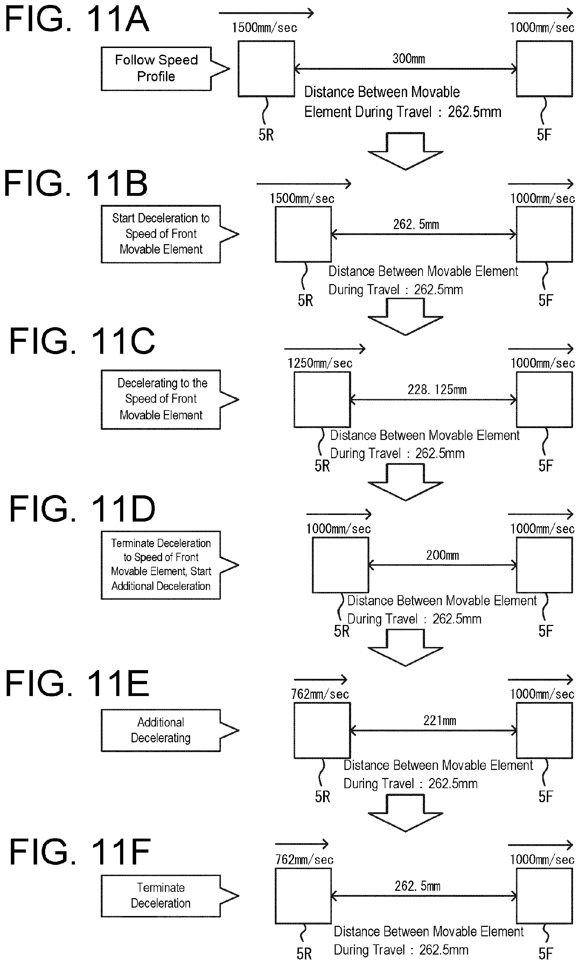

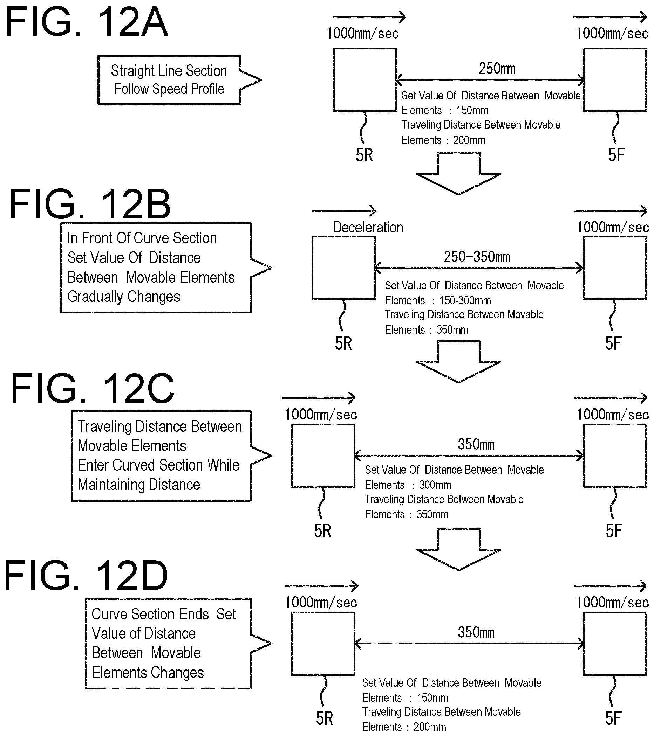

With reference to FIGS. 11A-11F and 12A-12D, a specific example of the operation of the movable element by the collision prevention processing unit 41 of the linear controller 13 will be described.

As shown in FIG. 11A, it is assumed that the rear movable element 5R (an example of a first movable element) to be processed and the front movable element 5F (an example of a second movable element) located in front of the rear movable element 5R are traveling with the actual distance between the movable elements being 300 mm, the distance between the movable elements during travel being 262.5 mm, the speed of the rear movable element 5R being 1500 mm/sec, the speed of the front movable element 5F being 1000 mm/sec, and acceleration/deceleration being 10m/S$^2$. In this state, since the distance between the actual movable elements is larger than the distance between the movable elements during travel (step S120 in FIG. 10: NO), the rear movable element 5R is controlled to follow the speed profile (step S110 in FIG. 10).

As shown in FIG. 11B, when the rear movable element 5R approaches the front movable element 5F and the actual distance between the movable elements becomes 262.5 mm or less (step S120 in FIG. 10: YES), the speed of the rear movable element 5R is decelerated so as to be substantially equal to the speed of the front movable element 5F (step S130 in FIG. 10).

As shown in FIG. 11C, until the speed of the rear movable element 5R is substantially equal to the speed of the front movable element 5F due to deceleration, the rear movable element 5R approaches the front movable element 5F, and the actual distance between the movable elements becomes shorter. In the example shown in FIG. 11C, for example, the speed of the rear movable element 5R is decelerated to 1250 mm/sec, and the distance between the actual movable elements 5 is 228.125 mm.

As shown in FIG. 11D, the speed of the rear movable element 5R is decelerated until the speed of the front movable element 5F is substantially equal to the speed of the rear movable element 5R. In the example shown in FIG. 11D, for example, the speed of the rear movable element 5R is reduced to 1000 mm/sec, which is the same as that of the front movable element 5F, and the actual distance between the movable elements is 200 mm. Further, an additional deceleration is started for the rear movable element 5R. In the example shown in FIG. 11D, since the distance between the movable elements during travel is 262.5 mm and the actual distance between the movable elements is 200 mm (the approaching distance is 62.5 mm), additional deceleration of + 23.8% (62.5 ÷ 262.5 × 100 ≒ 23.8) is started with respect to the rear movable element 5R. By the additional deceleration, the speed of the rear movable element 5R is decelerated until it becomes 762 mm/sec.

As shown in FIG. 11E, the speed of the rear movable element 5R is decelerated to 762 mm/sec by the additional deceleration, and the actual distance between the movable elements is 262.5 mm. In this case, when the command speed based on the speed profile of the rear movable element 5R is smaller than the speed 1000 mm/sec of the front movable element 5F (step S140 in FIG. 10: NO), the rear movable element 5R is controlled so as to follow the speed profile (step S110 in FIG. 10).

As shown in FIG. 11F, when the rear movable element 5R moves away from the front movable element 5F by the additional deceleration and the actual distance between the movable elements becomes larger than 262.5 mm (step S150 in FIG. 10: YES ), the deceleration of the rear movable element 5R is terminated (step S160 in FIG. 10).

FIGS. 12A-12D show specific examples of the operation of the movable element 5 when the set value of the distance between the movable elements fluctuates. As shown in FIG. 12A, it is assumed that the rear movable element 5R (an example of the first movable element 5) and the front movable element 5F (an example of the second movable element 5), which are objects to be processed, are traveling in a straight line section with the actual distance between the movable elements being 250 mm, the set value of the distance between the movable elements being 150 mm, the distance between the movable elements during travel being 200 mm, the speed of the rear movable element 5R being 1000 mm/sec, the speed of the front movable element 5F being 1000 mm/sec, and acceleration/deceleration being 10m/S$^2$. In this state, since the actual distance between the movable elements is larger than the distance between the movable elements during travel (step S120 in FIG. 10: NO), the rear movable element 5R is controlled to follow the speed profile (step S 110 in FIG. 10).

As shown in FIG. 12B, the set value of the distance between the movable elements gradually changes in front of the curve section. In the example shown in FIG. 12B, for example, the set value of the distance between the movable elements gradually increases in the range of 150 mm to 300 mm, and accordingly, the distance between the movable elements during travel changes to 350 mm. As a result, since the actual distance between the movable elements becomes equal to or less than the distance between the movable elements during travel (step S120 in FIG. 10: YES), deceleration (additional deceleration in this case) is started with respect to the rear movable element 5R (step S130 in FIG. 10). As a result, the actual distance between the movable elements gradually increases from 250 mm.

As shown in FIG. 12C, before entering the curve section, the actual distance between the movable elements becomes larger than 350 mm due to the deceleration with respect to the rear movable element 5R (step S150 in FIG. 10 : YES), and the deceleration with respect to the rear movable element 5R is terminated (step S160 in FIG. 10). As a result, the rear movable element 5R and the front movable element 5F enter the curved section while maintaining the distance (350 mm) between the movable elements during travel at the same speed of 1000 mm/sec. As a result, in the curved section, the actual distance between the movable elements can be made larger than that in the straight section to allow the movable elements 5 to travel, and collision between the movable elements can be prevented more reliably.

As shown in FIG. 12D, when the curve section ends, the set value of the distance between the movable elements changes. In the example shown in FIG. 12D, the set value of the distance between the movable elements returns to the original value of 150 mm, for example, and accordingly, the distance between the movable elements during traveling returns to the original value of 200 mm. As a result, since the distance between the actual movable elements (350 mm) becomes larger than the distance between the traveling movable elements (step S120 in FIG. 10: NO ), the rear movable element 5R is controlled to follow the speed profile (step S110 in FIG. 10).

<8. Effects of Embodiment

As described above, the linear transport system 1 of the present embodiment includes a stator 3 having a plurality of coils 17, a plurality of movable elements 5 having magnets 21 and moving along the stator 3 to convey a workpiece, a scale 23 provided on the movable elements 5, a plurality of sensor heads 25 arranged along the stator 3 at a predetermined installation interval to detect the scale 23, a parameter recording unit 27 which records a sensor interval error correction cumulative value or a sensor interval error-corrected offset accumulated from the sensor head 25 whose origin is set to an error value for correcting an error between the set value of the installation interval and a measured value, or a measured value, as a parameter for each sensor head 25, and a position calculation unit 29 which calculates a machine coordinate position of the movable elements 5 based on the detection data of the sensor head 25 having detected the scale 23 and the accumulated sensor interval error correction value or the sensor interval error-corrected offset set in the sensor head 25 having detected the scale 23.

In the linear transport system 1 of the present embodiment, the movable element 5 moves along the stator 3 to convey the workpiece. A plurality of sensor heads 25 arranged along the stator 3 at predetermined intervals detect a scale 23 provided on the movable element 5. In the parameter recording unit 27, an error value for correcting an error between a set value of an installation interval between sensor heads 25 and a previously measured value, or a sensor interval error correction cumulative value or a sensor interval error correction offset accumulated from the sensor head 25 with the measured value set as an origin, are recorded as separate parameters for each sensor head 25. The position calculation unit 29 calculates the machine coordinate position of the movable element 5 on the basis of the detection data of the sensor head 25 which has detected the scale 23 and the sensor interval error correction cumulative value or the sensor interval error correction offset set for the sensor head 25 which has detected the scale 23. In this way, the mechanical coordinate position of the movable element 5 can be calculated using only the detection data of the sensor head 25 that has detected the scale 23 and the parameters set for the sensor head 25. Since the processing for reading out the parameters of the other sensor head 25 or the like is unnecessary, the processing speed is increased, and the machine coordinate position of the movable element 5 can be calculated quickly. Therefore, the reliability of the linear transport system 1 can be improved. When any one of the sensor heads 25 is replaced, the sensor heads 25 other than the replaced sensor head 25 do not change because the parameter related to the error is a cumulative value. Therefore, only the parameters relating to the replaced sensor head 25 may be reset, and the installation interval measurement work and parameter setting work at the time of sensor replacement can be facilitated.

In the present embodiment, the sensor interval error correction cumulative value may be a value accumulated from the sensor head 25 whose origin is the error value between the set value of the installation interval and the measured value, the parameter recording unit 27 may record the sensor interval offset accumulated from the sensor head 25 whose origin is the set value of the installation interval as a separate parameter for each sensor head 25, and the position calculation unit 29 may calculate the machine coordinate position of the movable element 5 based on the detection data of the sensor head 25 which detected the scale 23, and the sensor interval error correction cumulative value and the sensor interval offset set in the sensor head 25 which detected the scale 23.

In this case, the cumulative value of the set value of the installation interval and the cumulative value of the error value of the installation interval are recorded as separate parameters for each sensor head 25. As a result, the magnitude of the accumulated error value in each sensor head 25 becomes clear, and the error value can be easily controlled.

In the present embodiment, the parameter recording unit 27 may record the origin offset, which is the detection data of the sensor head 25 that detected the scale 23 of the movable element 5, as a parameter common to a plurality of sensor heads 25 when the movable element 5 is located at a position to be the origin, and the position calculation unit 29 may calculate the machine coordinate position of the movable element 5 based on the detection data of the sensor head 25 that detected the scale 23, the accumulated sensor interval error correction value set for the sensor head 25 that detected the scale 23, and the origin offset.

In this case, an arbitrary position on the stator 3 can be set as the origin, and the machine coordinate position of the movable element 5 can be calculated with the origin as a reference. Therefore, the degree of freedom in setting the machine coordinates is increased, and the convenience of the user can be improved. Further, since the origin offset can be set as a parameter common to each sensor head 25, the parameter setting operation is facilitated.

In this embodiment, the linear transport system 1 may further comprise a multi-axis amplifier 11 for controlling the energization of a coil 17 in a part section of a stator 3, and a linear controller 13 connected to the multi-axis amplifiers 11 for managing the machine coordinate positions of the plurality of movable elements 5, in which case the linear controller 13 may comprise a collision prevention processing unit 41 for preventing a collision by monitoring the distance between the plurality of movable elements 5 on the basis of the machine coordinate position of the movable element 5 calculated by the position calculation unit 29 of the multi-axis amplifier 11, and the multi-axis amplifier 11 may comprise an emergency stop processing unit 31 for determining whether two or more movable elements 5 are present in a predetermined section of the stator 3 on the basis of the machine coordinate position of the movable element 5 calculated by the position calculation unit 29 and for urgently stopping the movable element 5 when it is determined that two or more movable elements 5 are present.

In this case, the linear transport system 1 can be provided with a two stage collision prevention function by two control methods, and a linear transport system 1 having a high collision prevention function can be realized. Further, by adopting a system in which the machine coordinate position of the movable element 5 is calculated by the multi-axis amplifier 11 having a processing speed higher than that of the linear controller 13, and the upper linear controller 13 performs collision prevention by utilizing the position of the movable element 5, collision prevention processing for the entire movable element 5 using the position of the movable element 5 with high accuracy becomes possible, and reliability can be improved.

In this embodiment, the collision prevention processing unit 41 may have a distance determination unit 43 for determining whether or not the actual distance between the rear movable element 5R positioned rearward in the moving direction of the plurality of movable elements 5 and the front movable element 5F positioned forward in the moving direction of the plurality of movable elements 5 is equal to or less than the distance between the movable elements 5 during travel, and an acceleration/deceleration control unit 45 for decelerating the speed of the rear movable element 5R so as to be equal to the speed of the front movable element 5F when the distance between the real movable elements 5 is determined by the distance determination unit 43 to be equal to or less than the distance between the movable elements 5 during travel.

In this case, it is possible to prevent the collision of front movable element 5F without stopping the rear movable element 5R. As a result, the linear transport system 1 can be realized which can prevent the collision of each movable element 5 while suppressing the increase in the tact time of the workpiece conveying.

In this embodiment, the travel distance between the movable elements 5 may be the sum of the set value of the distance between the movable elements 5 set in advance as the distance between the movable elements 5 and the deceleration distance of the rear movable element 5R required until the rear movable element 5R stops.

In this case, the distance between the movable elements during travel can be set to the sum of the set value of the distance between the movable elements and the braking distance of the rear movable element 5R. As a result, for example, when the front movable element 5F suddenly stops, the distance between the actual movable elements becomes within a predetermined distance, and even when the rear movable element 5R is stopped, the distance between the actual movable elements can be maintained at a set value of minutes. Therefore, the effectiveness of the collision prevention function can be enhanced.

In the present embodiment, when the speed of the rear movable element 5R is decelerated so as to be equal to the speed of the front movable element 5F, the acceleration/deceleration control unit 45 may perform additional deceleration on the basis of the difference value obtained by subtracting the distance between the real movable elements from the distance between the traveling movable elements.

In this case, it is possible to calculate how close the distance between the rear movable element 5R and the front movable element 5F is to the distance between the traveling movable elements 5 (i. e., approach amount). Then, by performing additional deceleration based on the approach amount, it is possible to perform additional deceleration that is larger as the distance between the actual movable elements after the approach is smaller (as the approach amount is larger). Thus, the reliability of the collision prevention function can be further improved.

In this embodiment, the collision prevention processing unit 41 may have a speed determination unit 47 for determining whether or not the speed of the front movable element 5F is greater than the command speed of the rear movable element 5R when the speed of the rear movable element 5R is decelerated to be equal to the speed of the front movable element 5F, and in this case, the acceleration/deceleration control unit 45 may control the speed of the rear movable element 5R so as to follow the command speed when the speed determination unit 47 determines that the speed of the front movable element 5F is greater than the command speed of the rear movable element 5R.

When the speed of the front movable element 5F is higher than the command speed of the rear movable element 5R, no collision occurs even if the rear movable element 5R is made to follow the command speed . Therefore, in such a case, by making the rear movable element 5R follow the command speed , it is possible to operate the rear movable element 5R according to the speed profile based on the position command while avoiding collision with the front movable element 5F.

<9. Hardware Configuration Example of Multi-Axis Amplifier or Linear Controller>

With reference to FIG. 13, a description will be given of a hardware configuration example of the multi-axis amplifier 11 which realizes processing by the parameter recording unit 27, the position calculation unit 29, the emergency stop processing unit 31, the motor control unit 33 and the like implemented by the program executed by the CPU901 described above. In FIG. 13, a configuration relating to a function of supplying electric power to the coil 17 of the multi-axis amplifier 11 is omitted. The hardware configuration of the linear controller 13 for realizing the processing by the collision prevention processing unit 41, the distance determination unit 43, the acceleration/deceleration control unit 45, the speed determination unit 47, and the like may be similarly configured.

As shown in FIG. 13, the multi-axis amplifier 11 (or linear controller 13) includes, for example, a CPU901, a ROM903, a RAM905, a dedicated integrated circuit 907 constructed for a specific application such as an ASIC or an FPGA, an input device 913, an output device 915, a recording device 917, a drive 919, a connection port 921, and a communication device 923. These configurations are connected so as to be able to transmit signals to each other via a bus 909 and an input/output interface 911.

The program can be recorded in, for example, a ROM903, a RAM905, a recording device 917 using a hard disk, or the like.

The program can also be recorded temporarily or non-temporarily (permanently) on a removable recording medium 925 such as a magnetic disk such as a flexible disk, an optical disk such as a CD, MO disk or DVD, or a semiconductor memory. Such a recording medium 925 can be provided as so-called package software. In this case, the program recorded on the recording medium 925 may be read by the drive 919 and recorded on the recording device 917 via the input/output interface 911, the bus 909, or the like.

The program may be recorded in a download site, another computer, another recording device, or the like (not shown). In this case, the program is transferred via a network NW such as a LAN or the Internet, and the communication device 923 receives the program. The program received by the communication device 923 may be recorded in the recording device 917 via the input/output interface 911, the bus 909, or the like.

The program may also be recorded in an appropriate external connection device 927, for example. In this case, the program may be transferred via an appropriate connection port 921 and recorded in the recording device 917 via an input/output interface 911, a bus 909, or the like.

Then, the CPU901 executes various processes according to the program recorded in the recording device 917, thereby realizing processes by the parameter recording unit 27, the position calculation unit 29, the emergency stop processing unit 31, the motor control unit 33, and the like. At this time, for example, the CPU901 may directly read a program from the recording device 917 and execute the program, or may temporarily load the program into the RAM905 and execute the program. Further, when the CPU901 receives a program via, for example, the communication device 923, the drive 919, or the connection port 921, it may directly execute the received program without recording it in the recording device 917.

Further, the CPU901 may perform various processes based on signals or information input from an input device 913 such as a mouse, keyboard, microphone (not shown), for example, as needed.

Then, the CPU901 may output the result of executing the above-described processing from an output device 915 such as a display device or an audio output device, and the CPU901 may transmit the processing result via the communication device 923 or the connection port 921 if necessary, and may record the processing result in the recording device 917 or the recording medium 925.

It should be noted that in the above description, when "vertical", "parallel", "plane" or the like is described, the description does not have a strict meaning. That is, the terms "vertical", "parallel", and "plane" mean "substantially vertical", "substantially parallel", and "substantially plane" in which design and manufacturing tolerances and errors are allowed.

Further, in the above description, when there are descriptions such as "same", "similar", "equal", and "different" in external dimensions, sizes, shapes, and positions, the descriptions do not have a strict meaning. In other words, the terms "same", "similar", "equal" and "different" mean "substantially same", "substantially similar", "substantially equal" and "substantially different", respectively, in which tolerances and errors in design and manufacturing are allowed.

However, when a threshold value (see the flow chart of FIG. 8 and FIG. 10), a reference value, or the like is described as a predetermined criterion value or a delimiting value, "same", "equal", "different" and the like for these values are different from those described above and have strict meanings.

In addition to the above-described methods, methods according to the above-described embodiments or modifications may be used in combination. In addition, although each example is not given, the above-described embodiments and each modification are implemented with various modifications within a range not departing from the spirit thereof.

Further, the problems and effects to be solved by the above-described embodiments, modifications and the like are not limited to the above-described contents. That is, according to embodiments, modifications, and the like, it is possible to solve a problem not described above or achieve an effect not described above, or it is possible to solve only a part of the described problem or achieve only a part of the described effect.

As used herein, the term "comprise" and its variations are intended to mean open-ended terms, not excluding any other elements and/or components that are not recited herein. The same applies to the terms "include" , "have" , and their variations.

As used herein, a component suffixed with a term such as "member" , "portion" , "part" , "element" , "body" , and "structure" is intended to mean that there is a single such component or a plurality of such components.

As used herein, ordinal terms such as "first" and "second" are merely used for distinguishing purposes and there is no other intention (such as to connote a particular order) in using ordinal terms. For example, the mere use of "first element" does not connote the existence of "second element" ; otherwise, the mere use of "second element" does not connote the existence of "first element"

As used herein, approximating language such as "approximately" , "about" , and "substantially" may be applied to modify any quantitative representation that could permissibly vary without a significant change in the final result obtained. All of the quantitative representations recited in the present application shall be construed to be modified by approximating language such as "approximately" , "about" , and "substantially"

As used herein, the phrase "at least one of A and B" is intended to be interpreted as "only A" , "only B" , or "both A and B"

Obviously, numerous modifications and variations of the present disclosure are possible in light of the above teachings. It is therefore to be understood that within the scope of the appended claims, the present disclosure may be practiced otherwise than as specifically described herein.

**Claims**

1. A linear transport system (1) comprising:

   a stator (3) including a track and a plurality of coils provided along the track;
   a plurality of movable elements (5) movable along the track, each of the plurality of movable elements (5) having a magnet;
   a plurality of scales (23) provided on the plurality of movable elements (5), respectively;
   a plurality of sensors (25) provided along the track of the stator (3) at respective intervals, the plurality of sensors (25) being configured to detect the plurality of movable elements (5) to obtain scale positions of the plurality of scales (23);
   a parameter recording unit (27) configured to memorize first cumulative values each corresponding to a corresponding sensor among the plurality of sensors (25), each of the first cumulative values being obtained by accumulating, from a reference position to the corresponding sensor, error correction values based on which errors between the respective intervals and measured values of the respective intervals are corrected; and
   a position calculation unit (29) configured to calculate a position of a detected movable element among the plurality of movable elements (5) based on detection data of a detecting sensor among the plurality of sensors (25) that has detected the detected movable element and based on the first cumulative value corresponding to the detecting sensor.

2. The linear transport system (1) according to claim 1,

   wherein the error correction values are differences between the respective intervals and the measured values of the respective intervals,
   wherein the parameter recording unit (27) is configured to memorize second cumulative values each corresponding to the corresponding sensor, each of the second cumulative values being obtained by accumulating the respective intervals from the reference position to the corresponding sensor, and
   wherein the position calculation unit (29) is configured to calculate the position of the detected movable element further based on the second cumulative value corresponding to the detecting sensor.

3. The linear transport system (1) according to claim 1 or 2,
   wherein the parameter recording unit (27) is configured to memorize, as a parameter common to the plurality of sensors (25), an origin correction value which is detection data of the plurality of sensors (25) that have detected the scale of each of the plurality of movable elements (5) when the plurality of movable elements (5) are located at the reference position, and
   wherein the position calculation unit (29) is configured to calculate the position of the detected movable element further based on the origin correction value.

4. The linear transport system (1) according to any one of claims 1 to 3, further comprising:

   a plurality of first controllers (11) each of which is configured to control group coils among the plurality of coils which are provided in a partial region of the track of the stator (3); and

a second controller (13) connected to the plurality of first controllers (11) to control the positions of the plurality of movable elements (5),

wherein the second controller (13) includes a collision prevention processing unit (41) to prevent a collision by monitoring a distance between the plurality of movable elements (5) based on positions of the plurality of movable elements (5) calculated by the position calculation unit (29), and

wherein the plurality of first controllers (11) has an emergency stop processing unit (31) configured to determine whether two or more of the plurality of movable elements (5) exist within the respective intervals based on the positions of the plurality of movable elements (5) calculated by the position calculation unit (29), and configured to stop the plurality of movable elements (5) when it is determined that the two or more movable elements (5) exist.

5. A linear transport system (1) comprising:

a stator (3) including a track and a plurality of coils provided along the track;

a plurality of movable elements (5) movable along the track, each of the plurality of movable elements (5) having a magnet;

a plurality of scales (23) provided on the plurality of movable elements (5), respectively;

a plurality of sensors (25) provided along the track of the stator (3) at respective intervals, the plurality of sensors (25) being configured to detect the plurality of movable elements (5) to obtain scale positions of the plurality of scales (23);

a plurality of first controllers (11) each of which is configured to control group coils among the plurality of coils which are provided in a partial region of the track of the stator (3); and

a second controller (12) connected to the plurality of first controllers (11) to control positions of the plurality of movable elements (5),

wherein the second controller (12) includes a collision prevention processing unit (41) to prevent a collision by monitoring a distance between the plurality of movable elements (5) based on detection data of the plurality of sensors (25), and

wherein the each of the first controllers (11) has an emergency stop processing unit (31) configured to determine whether two or more of the plurality of movable elements (5) exist within the respective intervals based on the detection data of the plurality of sensors (25), and configured to stop the plurality of movable elements (25) when it is determined that the two or more movable elements (5) exist within the respective intervals.

6. The linear transport system (1) according to claim 5, further comprising:

a parameter recording unit (27) configured to memorize first cumulative values each corresponding to a corresponding sensor among the plurality of sensors (25), each of the first cumulative values being obtained by accumulating, from a reference position to the corresponding sensor, error correction values based on which errors between the respective intervals and measured values of the respective intervals are corrected; and

a position calculation unit (29) configured to calculate a position of a detected movable element among the plurality of movable elements (5) based on detection data of a detecting sensor among the plurality of sensors (25) that has detected the detected movable element and based on the first cumulative value corresponding to the detecting sensor.

7. The linear transport system (1) according to claim6,

wherein the error correction values are differences between the respective intervals and the measured values of the respective intervals,

wherein the parameter recording unit (27) is configured to memorize second cumulative values each corresponding to the corresponding sensor, each of the second cumulative values being obtained by accumulating the respective intervals from the reference position to the corresponding sensor, and

wherein the position calculation unit (29) is configured to calculate the position of the detected movable element further based on the second cumulative value corresponding to the detecting sensor.

8. The linear transport system (1) according to claim 6 or 7,

wherein the parameter recording unit (27) is configured to memorize, as a parameter common to the plurality of sensors (25), an origin correction value which is detection data of the plurality of sensors (25) that have detected the scale of each of the plurality of movable elements (5) when the plurality of movable elements (5) are located at the reference position, and

wherein the position calculation unit (29) is configured to calculate the position of the detected movable element further based on the origin correction value.

9. The linear transport system (1) according to any one of claims 4 to 8,
   wherein the collision prevention processing unit (41) comprises

   a distance determination unit (43) to determine whether or not a distance between a first movable element positioned rearward in a moving direction of the plurality of movable elements (5) and a second movable element positioned forward in the moving direction is equal to or less than a threshold value, and
   an acceleration/deceleration control unit (45) to decelerate a speed of the first movable element so as to be equal to a speed of the second movable element when the distance between the first movable element and the second movable element is determined by the distance determination unit (43) to be equal to or less than the threshold value.

10. The linear transport system (1) according to claim 9, wherein the threshold value is a sum of a set value that is set in advance as the distance between the movable elements (5) and a stopping distance required to stop the first movable element.

11. The linear transport system (1) according to claim 9 or 10, wherein the acceleration/ deceleration control unit (45) executes additional deceleration based on a difference value obtained by subtracting the distance between the movable elements (5) from the threshold when the speed of the first movable element is decelerated so as to be equal to the speed of the second movable element.

12. The linear transport system (1) according to any one of claims 9 to 11,
    Wherein the collision prevention processing unit (41) has a speed determination unit (47) to determine whether or not the speed of the second movable element is greater than a command speed of the first movable element when the speed of the first movable element is decelerated so as to be equal to the speed of the second movable element, and
    wherein the acceleration/deceleration control unit (45) controls the speed of the first element so as to follow the command speed when the speed determination unit (47) determines that the speed of the second movable element is greater than the command speed of the first movable element.

13. A method for controlling a linear transport system (1), comprising:

    providing a stator (3) which includes a track and a plurality of coils provided along the track;
    providing a plurality of movable elements (5) movable along the track, each of the plurality of movable elements (5) having a magnet;
    providing a plurality of scales (23) on the plurality of movable elements (5), respectively;
    providing a plurality of sensors (25) along the track of the stator (3) at respective intervals, the plurality of sensors (25) detecting the plurality of movable elements (5) to obtain scale positions of the plurality of scales (23);
    accumulating, from a reference position to a corresponding sensor among the plurality of sensors (25), to obtain first cumulative values, error correction values based on which errors between the respective intervals and measured values of the respective intervals are corrected;
    memorizing the first cumulative values each corresponding to the corresponding sensor; and
    calculating a position of a detected movable element among the plurality of movable elements (5) based on detection data of a detecting sensor among the plurality of sensors (25) that has detected the detected movable element and based on the first cumulative value corresponding to the detecting sensor.

14. A method for controlling a linear transport system (1), comprising:

    providing a stator (3) which includes a track and a plurality of coils provided along the track;
    providing a plurality of movable elements (5) movable along the track, each of the plurality of movable elements (5) having a magnet;
    providing a plurality of scales (23) on the plurality of movable elements (5), respectively;
    providing a plurality of sensors (25) along the track of the stator (3) at respective intervals, the plurality of sensors (25) detecting the plurality of movable elements (5) to obtain scale positions of the plurality of scales (23);
    providing a plurality of first controllers (11) each of which is configured to control group coils among the plurality of coils which are provided in a partial region of the track of the stator (3);
    determining, by the plurality of first controllers (11), whether two or more of the plurality of movable elements (5) exist within the respective intervals based on the detection data of the plurality of sensors (25);

stopping the plurality of movable elements (5) when the plurality of first controllers (11) determine that the two or more movable elements (25) exist within the respective intervals;

providing a second controller (12) connected to the plurality of first controllers (11) to control positions of the plurality of movable elements (5); and

preventing a collision, by the second controller, by monitoring a distance between the plurality of movable elements (5) based on detection data of the plurality of sensors (25).

# FIG. 1

EP 4 194 977 A2

# FIG. 2

# FIG. 3

**Multi-Axis Amplifier** — 11

| Parameter Recording Unit ~27 | Position Calculation Unit ~29 | Emergency Stop Processing Unit ~31 |

**Motor Control Unit** ~33

| Position Control Unit ~35 | Speed Control Unit ~37 | Current Control Unit ~39 |

• • • ▪   Sensor Head   Sensor Head   Sensor Head   • • • ▪

25            25            25

# FIG. 4

| | | | | |
|---|---|---|---|---|
| Origin Offset [pls] | 100 | 100 | 100 | 100 |
| Sensor Interval Offset [pls] | 2998000 | 0 | 2000 | 4000 |
| Sensor Head Acquisition Position [pls] | 2100 | 100 | — | — |

EP 4 194 977 A2

# FIG. 5

| | | | | |
|---|---|---|---|---|
| Origin Offset [pls] | 100 | 100 | 100 | 100 |
| Sensor Interval Offset [pls] | 2998000 | 0 | 2000 | 4000 |
| Sensor Head Acquisition Position [pls] | — | — | 2100 | 100 |

Sensor Head — A ~25A — B ~25B — C ~25C — D ~25D

Length of Movable Element 30[mm]=3000[pls]

~23
~21 } 5

N S N S N S N S

⟹ Moving Direction

Machine Coordinate — • Origin

Machine Coordinate Position of Movable Element 40[mm]=4000[pls]

Sensor Interval 20[mm]=2000[pls]

Sensor Interval 20[mm]=2000[pls]

Sensor Interval 20[mm]=2000[pls]

EP 4 194 977 A2

# FIG. 6

EP 4 194 977 A2

| | | | |
|---|---|---|---|
| Origin Offset [pls] | 100 | 100 | 100 |
| Sensor Interval Offset [pls] | 0 | 2000 | 4000 |
| Sensor Interval Error Correction Cumulative Value [pls] | 0 | 300 | 400 |
| Sensor Head Acquisition Position [pls] | — | 2200 | 100 |
| Sensor Head | B 〜25B | C 〜25C | D 〜25D |

Length of Movable Element
30[mm]=3000[pls]

〜23
N S N S N S N S 〜21 } 5

⟹ Moving Direction

Machine Coordinate ---- Original

Machine Coordinate Position of Movable Element
44[mm]=4000[pls]

Sensor Interval
23[mm]=2300[pls]

Sensor Interval
21[mm]=2100[pls]

# FIG. 7

| | | | |
|---|---|---|---|
| Origin Offset [pls] | 100 | 100 | 100 |
| Sensor Interval Error Corrected Offset [pls] | 0 | 2300 | 4400 |
| Sensor Head Acquisition Position [pls] | — | 2200 | 100 |

Sensor Head

B ⌐∼25B　　　C ⌐∼25C　　　D ⌐∼25D

Length of Movable Element
30[mm]=3000[pls]

∼23
∼21 } 5

Machine Coordinate

Origin

⇨ Moving Direction

Machine Coordinate Position of Movable Element
44[mm]=4000[pls]

Sensor Interval
23[mm]=2300[pls]

Sensor Interval
21[mm]=2100[pls]

N | S | N | S | N | S | N | S

EP 4 194 977 A2

# FIG. 8

```
                    ┌──────────────┐
                    │    START     │
                    └──────┬───────┘
                           ▼
          ┌─────────────────────────────────────┐
          │   Acquire Parameter of Sensor Head   │───S10
          └──────────────────┬──────────────────┘
                             ▼
                          ╱────────╲
         NO          ╱                 ╲    S20
       ◄─────────── ╱   Detect Scale ?   ╲
                    ╲                    ╱
                     ╲                 ╱
                      ╲──────┬────────╱
                        YES  ▼
          ┌─────────────────────────────────────┐
          │  Acquire Detection Data from Sensor Head │───S30
          └──────────────────┬──────────────────┘
                             ▼
          ┌─────────────────────────────────────┐
          │ Calculate Machine Coordinate Position of │───S40
          │           Movable Element            │
          └──────────────────┬──────────────────┘
                             ▼
          ┌─────────────────────────────────────┐
          │   Control Movable Element Based on   │
          │ Machine Coordinate Position of Movable │───S50
          │ Element Calculated and Position Command │
          └──────────────────┬──────────────────┘
                             ▼
                          ╱────────╲
                     ╱                 ╲    S60
                    ╱ Complete Detection of Scale ?╲──── NO
                    ╲                    ╱
                     ╲                 ╱
                      ╲──────┬────────╱
                        YES
```

# FIG. 9

Linear Controller

Collision Prevention Processing Unit

Distance Determination Unit

Acceleration/ Deceleration Control Unit

Speed Determination Unit

13

41

43

45

47

# FIG. 10

START

Control Movable Element So As To follow Speed Profile ～S110

Distance Between Front Movable Element
≦
Distance Between Movable Element During Travel ? ～S120

NO

YES

Decelerate To Speed Of Front Movable Element,
Additional Deceleration In Proportion To Approach Amount ～S130

Speed Of Front Movable Element
≦
Speed Profile Command Speed ? ～S140

NO

YES

Distance Between Front Movable Element
>
Distance Between Movable Element During Travel ? ～S150

NO

YES

Terminate Deceleration ～S160

# FIG. 11A

1500mm/sec →

Follow Speed
Profile

300mm

Distance Between Movable
Element During Travel : 262.5mm

1000mm/sec →

5R

5F

# FIG. 11B

1500mm/sec →

Start Deceleration to
Speed of Front
Movable Element

262. 5mm

Distance Between Movable Element
During Travel : 262.5mm

1000mm/sec →

5R

5F

# FIG. 11C

1250mm/sec →

Decelerating to the
Speed of Front
Movable Element

228. 125mm

Distance Between Movable Element
During Travel : 262.5mm

1000mm/sec →

5R

5F

# FIG. 11D

1000mm/sec →

Terminate Deceleration
to Speed of Front
Movable Element, Start
Additional Deceleration

200mm

Distance Between Movable Element
During Travel : 262.5mm

1000mm/sec →

5R

5F

# FIG. 11E

762mm/sec →

Additional
Decelerating

221mm

Distance Between Movable Element
During Travel : 262.5mm

1000mm/sec →

5R

5F

# FIG. 11F

762mm/sec →

Terminate
Deceleration

262. 5mm

Distance Between Movable Element
During Travel : 262.5mm

1000mm/sec →

5R

5F

# FIG. 12A

Straight Line Section
Follow Speed Profile

1000mm/sec    1000mm/sec

250mm

Set Value Of Distance Between Movable
Elements : 150mm
Traveling Distance Between Movable
Elements : 200mm

5R    5F

# FIG. 12B

In Front Of Curve Section
Set Value Of Distance
Between Movable Elements
Gradually Changes

Deceleration    1000mm/sec

250-350mm

Set Value Of Distance Between Movable
Elements : 150-300mm
Traveling Distance Between Movable
Elements : 350mm

5R    5F

# FIG. 12C

Traveling Distance Between
Movable Elements
Enter Curved Section While
Maintaining Distance

1000mm/sec    1000mm/sec

350mm

Set Value Of Distance Between Movable
Elements : 300mm
Traveling Distance Between Movable
Elements : 350mm

5R    5F

# FIG. 12D

Curve Section Ends Set
Value of Distance
Between Movable
Elements Changes

1000mm/sec    1000mm/sec

350mm

Set Value Of Distance Between Movable
Elements : 150mm
Traveling Distance Between Movable
Elements : 200mm

5R    5F

# FIG. 13

11(13)

Multi-Axis Amplifier
(Linear Controller)

901 CPU

903 ROM

905 RAM

907 Dedicated Integrated Circuit

909 Bus

911 Input/Output Interface

913 Input Device

915 Output Device

917 Recording Device

919 Drive

921 Connection Port

923 Communication Device

925 Recording Medium

927 External Connection Device

NW

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018055772 A